# EUROPÄISCHE PATENTANMELDUNG

(11) **EP 3 085 979 A1**
(43) Veröffentlichungstag der Anmeldung: **26.10.2016**
(21) Anmeldenummer: 16166655.7
(22) Anmeldetag: 22.04.2016
(51) Int. Cl.: F16D 13/58

(54) **TELLERFEDER MIT INTEGRIERTEN STÜTZFEDERABSCHNITTEN**

(30) Priorität: 23.04.2015 DE 102015207389
(71) Anmelder: Schaeffler Technologies AG & Co. KG, 91074 Herzogenaurach (DE)
(72) Erfinder: Seifarth, Daniel, 77815 Bühl (DE); Kotljarow, Valeri, 77743 Schutterzell (DE); Kern, Andreas, 77815 Bühl (DE)

(57) **Zusammenfassung**

Die Erfindung betrifft eine Tellerfeder (1) für eine Kraftfahrzeugkupplung, mit Tellerfederfenstern (2), um ein Durchragen wenigstens eines Abstützelementes (3) für die Tellerfeder (1) durch die Tellerfeder (1) hindurch zu ermöglichen, wobei die Tellerfeder (1) wenigstens einen integralen Stützfederabschnitt (4) aufweist, der zum vorspannenden Anliegen an einer Gegenfläche (5) des Abstützelements (3) vorbereitet ist. Die Erfindung betrifft auch eine Kupplung, umfassend eine derartige Tellerfeder (1) und einen Kupplungsdeckel (18), der ein integrales Abstützelement (3) mit einer Gegenfläche (5) oder ein vom Kupplungsdeckel separates Abstützelement (3) mit einer Gegenfläche (5) aufweist, wobei an der Gegenfläche (5) der Stützfederabschnitt (4) anliegt.

## Beschreibung

Die Erfindung betrifft eine Tellerfeder für eine Kraftfahrzeugkupplung, wobei die Tellerfeder in Umfangsrichtung gleichmäßig verteilte Tellerfederfenster aufweist, um ein Durchragen wenigstens eines Abstützelementes für die Tellerfeder, wie eines Deckelhakens eines Kupplungsdeckels oder eines vom Kupplungsdeckel separaten Bolzens, durch die Tellerfeder hindurch zu ermöglichen.

Hierzu offenbart die Offenlegungsschrift DE 10 2010 034 823 A1 eine Reibungskupplung mit einer Nachstelleinrichtung. Die Offenlegungsschrift offenbart eine Reibungskupplung mit einem Gehäuse, einer fest mit dem Gehäuse verbundenen Gegendruckplatte und einer gegenüber dieser axial verlagerbaren und drehfest mit dem Kupplungsgehäuse verbundenen Anpressplatte. Weiterhin umfasst die Kupplung eine Kupplungsscheibe mit verspannbaren Reibbelägen, eine entlang eines Ausrückwegs mit einer Ausrückkraft beaufschlagbare Tellerfeder sowie eine verschleißausgleichende Nachstelleinrichtung. Diese umfasst einen zwischen dem Gehäuse und der Anpressplatte wirksam angeordneten Verstellring, der von einem Energiespeicher in Umfangsrichtung angetriebenen wird.

Weiterhin beschreibt die WO 2014/166488 A1 eine Druckplattenbaugruppe und eine Kupplungsvorrichtung mit einer Druckplattenbaugruppe. Diese Offenlegungsschrift betrifft eine Druckplattenbaugruppe mit zumindest einem Kupplungsdeckel und zumindest einer teilweise innerhalb des Kupplungsdeckels angeordneten, in axialer Richtung der Druckplattenbaugruppe begrenzt verlagerbaren Anpressplatte zur reibschlüssigen Klemmung einer Kupplungsscheibe zwischen der Anpressplatte und einer Gegendruckplatte. Auch umfasst die Druckplattenbaugruppe zumindest ein Hebelelement, das mittels einer Schwenklagerung verkippbar am Kupplungsdeckel gelagert ist, wobei die Schwenklagerung ein deckelseitiges Lager, an einer dem Kupplungsdeckel zugewandten Oberfläche, und ein anpressplattenseitiges Lager, das einer der Anpressplatten zugewandt ist, aufweist.

Die deutsche Patentanmeldung mit dem amtlichen Aktenzeichen 10 2014 221 598.6 betrifft eine Deckelanordnung für eine Reibungskupplung. Sie offenbart eine Deckelanordnung für eine Reibungskupplung, mit deren Hilfe eine Reibungskupplung zum Kuppeln einer Antriebswelle eines Kraftfahrzeugmotors mit mindestens einer Getriebeeingangswelle eines Kraftfahrzeuggetriebes geöffnet und/oder geschlossen werden kann.

Die deutsche Patentanmeldung mit dem amtlichen Aktenzeichen 10 2014 222 063.7 betrifft eine Hakenkupplung mit einem Zentrierbolzen. Diese offenbart eine Hakenkupplung, die sowohl Stützfedern, als auch Tellerfedern aufweist. Die darin enthaltene Stützfeder wird über Haken des Kupplungsdeckels zentriert, wobei eine Tellerfeder über Zentrierbolzen zentriert wird.

Eine Reibungskupplungseinrichtung ist auch in der DE 10 2013 216 065 A1 veröffentlicht, insbesondere für einen Antriebsstrang eines brennkraftmaschinenbetriebenen Kraftfahrzeugs, aufweisend eine Drehachse, ein Gehäuse und wenigstens eine zu einer Betätigung zwischen einer eingerückten Betätigungsstellung und einer ausgerückten Betätigungsstellung relativ zu dem Gehäuse in Richtung der Drehachse verlagerbaren Anpressplatte. Weiterhin umfasst die Reibungskupplungseinrichtung eine erste Feder zur Beaufschlagung der wenigstens einen Anpressplatte und eine zweite Feder zur Reduzierung einer Betätigungskraft in einem Verschleißzustand, wobei die zweite Feder sich auf einem ersten Durchmesser am Gehäuse unmittelbar oder mittelbar abstützt und sich auf einem zweiten Durchmesser an der ersten Feder unmittelbar oder mittelbar abstützt. Der erste Durchmesser ist hierbei kleiner als der zweite Durchmesser.

Die Nachteile des in diesen Druckschriften offenbarten Standes der Technik liegen darin, dass sämtliche Kupplungseinrichtungen aus einer Vielzahl von Bauelementen bestehen. Diese Vielzahl beeinträchtigt zum einen die Montage der Kupplung hinsichtlich ihrer Komplexität, und zum anderen wirkt sich eine hohe Anzahl von Elementen innerhalb einer Kupplungsbaugruppe negativ auf ihre logistische Handhabung aus.

Es ist somit die Aufgabe der vorliegenden Erfindung, die Nachteile aus dem Stand der Technik zu beheben, und insbesondere eine Kupplung zur Verfügung zu stellen, die die Vielzahl an Bauelementen innerhalb einer Kupplung verringert und somit für eine höhere Kompaktheit und eine einfachere Montage der Kupplung sorgt.

Dies wird erfindungsgemäß dadurch gelöst, dass die Tellerfeder wenigstens einen integralen / einstückigen / einstofflichen Stützfederabschnitt aufweist, der zum vorspannenden Anliegen an einer Gegenfläche des Abstützelements vorbereitet / bemessen ist. Dieser in die Tellerfeder integrierte Stützfederabschnitt ersetzt die separate Stützfeder, wodurch die Kupplung ein Bauelement weniger aufweist. Dies senkt zum einen die Kosten der Kupplungseinheit, da keine Stützfeder mehr gefertigt werden muss, und zum anderen vereinfacht diese Maßnahme die Montage einer Kupplungseinheit. Zu erwähnen ist auch die vorteilhafte logistische Handhabung der erfindungsgemäßen Vorrichtung, da mit dem Wegfall eines Bauelements die Komplexität der Just-in-Sequence-Fertigung spürbar abnimmt.

Vorteilhafte Ausführungsformen sind in den Unteransprüchen beansprucht und werden nachfolgend näher erläutert.

So ist es von Vorteil, wenn der Stützfederabschnitt eine in Umfangsrichtung verlaufende Anfangskante, eine in Umfangsrichtung verlaufende Endkante, sowie eine an die Endkante angrenzende Anlagefläche aufweist, wobei die Anfangskante und die Endkante axial zueinander durch Zwischenschaltung eines Hebelabschnitts versetzt sind. Diese eindeutige geometrische Definition des Stützfederabschnitts bewirkt, dass die Funktionen der integral ausgebildeten Tellerfeder klar getrennt werden können. Innerhalb der Struktur der Tellerfeder wird demnach auch geometrisch getrennt, zwischen den beiden Funktionen der Vorspannung und der eigentlichen Wirkrichtung der Feder in axialer Richtung. Somit wird eine Überbelastung der Tellerfeder aufgrund einer zu hohen Anzahl an verschiedenen Kräften, die auf die einzelnen Abschnitte wirken, vermieden.

Weiterhin zieht der axiale Versatz der Anfangskante zur Endkante einen Hebelabschnitt / Hebelarm nach sich, der eine möglichst gezielte Vorspannung der Tellerfeder ermöglicht. Ein weiterer Vorteil jener Geometrie ist, dass die Anlagefläche des Stützfederabschnitts klar definiert ist, wodurch die Anlagefläche die nötigen werkstoffspezifischen Eigenschaften aufweist, um in Kontakt mit einer anderen Fläche zu treten.

Es ist weiterhin von Vorteil, wenn der Hebelabschnitt bzw. der Stützfederabschnitt eine geschwungene Form aufweist. Daraus resultiert der erwähnte axiale Versatz zwischen der Anfangs- und der Endkante. Die geschwungene Form bewirkt, dass das die Anfangs- und die Endkante verbindende Material nicht auf kürzestem, geradem Weg verläuft, was aber auch möglich ist im Sinne einer geraden / linearen Ausgestaltung. Das zu einer geraden Ausgestaltung zusätzliche, d.h. mehr eingesetzte Material ermöglicht, dass mehr Kraft vom Stützfederabschnitt aufgenommen werden kann, woraus eine robustere Tellerfeder resultiert.

Eine weitere vorteilhafte Ausführungsform ist dadurch gekennzeichnet, dass der Hebelabschnitt bzw. Stützfederabschnitt eine S-Form aufweist. Diese S-Form bewirkt, dass der Hebelabschnitt bzw. Stützfederabschnitt tangential aus der Tellerfeder hervortritt, und weiterhin eine tangentiale Anlagefläche zu einem angrenzenden Material ermöglicht. Neben dem sinnvollen Kraftfluss, der durch eine S-Form gewährleistet wird, zieht diese Ausführung also den Vorteil nach sich, dass sowohl die Ausformung aus der Tellerfeder heraus, als auch die Anlagefläche sinnvoll mit anderen Bauelementen in Verbindung gebracht werden können.

Eine weitere vorteilhafte Ausführungsform besteht darin, dass der Stützfederabschnitt in Form einer diskreten, (feder-)elastisch wirkenden Stützfederzunge ausgestaltet ist. Durch jene definierte, zungenartige Form, wird die Tragstruktur der Tellerfeder nicht beeinträchtigt. Somit gewährleistet die Stützfederzunge zum einen eine weiterhin ausreichende Festigkeit der Tellerfeder und weiterhin einen klar definierten, radialen Kraftfluss, da die Breite der zungenartigen Form einen entsprechenden Kraftfluss ermöglicht. Eine solche zungenartige Ausgestaltung ermöglicht es weiterhin, dass die bereits erwähnten Tellerfederfenster, die das Durchragen wenigstens eines Abstützelements ermöglichen, variabel gestaltet werden können. Diese Ausführungsform hat demnach Vorteile gegenüber einem wenigstens abschnittsweise, ringartigen Stützfederabschnitt der Tellerfeder.

Es ist auch von Vorteil, wenn der Abstand zwischen der Anfangs- und der Endkante der Stützfederzunge größer ist, als die Breite der Stützfederzunge in Umfangsrichtung. Somit ist garantiert, dass neben dem Stützfederabschnitt der Tellerfeder ausreichend Tragstruktur zur Verfügung gestellt werden kann. Die Festigkeit der Tellerfeder wird demnach vorteilhaft beeinflusst.

Ferner ist es auch vorteilhaft, wenn mehrere Stützfederzungen in Umfangsrichtung gleichmäßig verteilt aus der Tellerfeder bzw. dem Tellerfedermaterial ausgeformt sind. Dies bewirkt, dass neben der ausreichend zur Verfügung gestellten Tragstruktur der Tellerfeder, auch ein ausreichender Kraftfluss durch die Stützfederzungen garantiert wird. Die gleichmäßige Verteilung der Stützfederzungen ermöglicht eine gleichmäßige Kraftübertragung der Vorspannung auf die Tellerfeder. Weiterhin kann die Anzahl der Stützfederzungen so gewählt werden, dass die beiden gegenläufigen Effekte des Materialabtrags und der Kraftübertragung optimal kombiniert werden.

Es ist weiterhin von Vorteil, wenn das Maß der Vorspannung der Tellerfeder über eine bspw. gezielte Wahl der Stützfederabschnittshöhe, die den Betrag des axialen Abstands zwischen der Anfangs- und der Endkante angibt, einstellbar ist / eingestellt wird. Somit kann, analog zur eigentlichen Stützfeder, nun in der Fertigung beeinflusst werden, wie viel Vorspannung der Tellerfeder vorgenommen werden soll. Dies ermöglicht eine den Rahmenbedingungen angepasste Fertigung der Tellerfeder. Es wird also gewährleistet, dass bei gleichbleibender Funktionserfüllung eine Abnahme des Komplexitätsgrades bewirkt wird, was neben den Montagevorteilen auch eine Gewichtsabnahme nach sich zieht. Somit wird ein noch effizienteres Arbeiten der Kupplung ermöglicht.

Wenn die Endkante des Stützfederabschnitts radial innerhalb der Anfangskante liegt, so baut eine die Tellerfeder einsetzende Kupplung besonders klein. Das durch den axialen Versatz der beiden Kanten hervorgerufene Moment bewirkt in diesem Fall eine Vorspannung der Tellerfeder in Wirkrichtung, wobei der radial äußere Teil der Tellerfeder vorgespannt wird. Somit ist die Fläche der Tellerfeder, die auf eine Druckplatte wirkt, größer. Der nötige Reibkraftschluss zwischen der Tellerfeder und einer Druckplatte kann somit effizient gewährleistet werden.

Es ist weiterhin vorteilhaft, wenn die Tellerfeder so ausgestaltet ist, dass die Endkante axial in Richtung einer Druckplatte zur Anfangskante versetzt ist. Somit nutzt der Stützfederabschnitt der Tellerfeder den freien Bauraum, der sich in Richtung der Druckplatte erstreckt und erlaubt die nahe Anordnung des Kupplungsdeckels in der Richtung entgegen der Druckplatte. Diese Anordnung garantiert eine kompakte Kupplungseinheit, was den Vorteil des minimalen Bauraums der Kupplung nach sich zieht.

Die Erfindung betrifft auch eine Kupplung mit einer erfindungsgemäßen Tellerfeder. Eine vorteilhafte Ausführungsform ist dabei dadurch gekennzeichnet, dass ein Kupplungsdeckel enthalten ist, der ein integrales Abstützelement mit einer Gegenfläche oder ein vom Kupplungsdeckel separates Abstützelement mit einer Gegenfläche aufweist, wobei an der Gegenfläche der Stützfederabschnitt anliegt. Mit anderen Worten ist also eine Kupplung betroffen, umfassend eine Tellerfeder und einen Kupplungsdeckel, der integral, oder mittels eines vom Kupplungsdeckel separaten Bauteils, Abstützelemente mit einer Gegenfläche aufweist.

Eine solche Kupplung ermöglicht demnach ein Zusammenspiel der Anlagefläche des Stützfederabschnitts der Tellerfeder und der Gegenfläche der Abstützelemente. Somit ist örtlich vorbestimmt, an welcher Stelle die Wechselwirkungen zwischen der Tellerfeder und dem Kupplungsdeckel vorgenommen werden. Dies resultiert in einem exakt vorhersehbaren Kraftfluss, was bewirkt, dass die Leitstützstruktur, die den Kraftfluss aufnimmt, entsprechend ausgestaltet werden kann. Weiterhin vorteilhaft ist, dass die entsprechenden Flächen, die miteinander in Kontakt sind, materialspezifisch so gestaltet werden können, dass sie sich für die Kraftübertragung optimal eignen.

Eine weitere vorteilhafte Ausführungsform der Kupplung besteht darin, dass die Anlagefläche des Stützfederabschnitts bei einem Kontakt mit der Gegenfläche des Abstützelements des Kupplungsdeckels eine Kontaktfläche ausbildet. Diese Kontaktfläche definiert das Wirkflächenpaar, das die Vorspannung der Tellerfeder aufnimmt. Diese klar definierte Kontaktfläche zieht den Vorteil nach sich, dass der Bereich, in dem eine Kraftübertragung von einem Element auf ein anderes Element stattfindet, geometrisch genau festgelegt ist.

Es ist weiterhin vorteilhaft, wenn die Kupplung so ausgestaltet ist, dass die Kontaktfläche in radialer Richtung verläuft. Somit wird axial der kleinstmögliche Bauraum eingenommen, was eine kompakte Kupplung nach sich zieht. Weiterhin garantiert diese in radialer Richtung verlaufende Kontaktfläche, dass die Richtung des Kraftflusses, der durch die Vorspannung in den Stützfederabschnitt der Tellerfeder einwirkt, in der gleichen Richtung wirkt, wie die Tellerfeder, um den Reibkraftschluss zwischen den getriebeseitigen Komponenten und den motorseitigen Komponenten vorzunehmen.

Es ist auch vorteilhaft, wenn die Kupplung so ausgestaltet ist, dass das Abstützelement aus dem Kupplungsdeckel integral als Deckelhaken ausgeformt ist. Auf diese Weise werden die Funktionen des Abstützelements und die des Kupplungsdeckels von ein und demselben einförmigen Bauteil übernommen. Somit nimmt die Komplexität der Einheit ab, da ein Element weniger in der Kupplung vorhanden ist.

Eine weitere vorteilhafte Ausführungsform der Kupplung ist derart aufgebaut, dass das Abstützelement als ein vom Kupplungsdeckel separater Bolzen ausgestaltet ist. Diese Anordnung ermöglicht es, für die erfindungsgemäße Vorrichtung eine standardmäßige Form des Kupplungsdeckels zu verwenden, und diese mit einem separaten Bolzen zu versehen. Somit können die Vorteile von Modulbauweisen ausgenutzt werden.

Es ist auch vorteilhaft, wenn der Bolzen als ein Stufenbolzen ausgebildet ist. Dies ermöglicht es, eine Standard-Bolzenform einzusetzen, was die Produktionskosten senkt. Stufenbolzen besitzen allgemein den Vorteil, günstig herstellbar zu sein und zuverlässig ihre Funktion zu erfüllen.

Eine weitere vorteilhafte Ausführungsform ist dadurch gekennzeichnet, dass jener Stufenbolzen einen Setzkopf an einem Ende aufweist, der die Gegenfläche ausbildet, an der die Anlagefläche des Stützfederabschnitts abstützend in Anlage befindlich ist. Somit wird die Kontaktfläche von einem Setzkopf bereitgestellt, was es ermöglicht, den Setzkopf dementsprechend auszugestalten. Diese Trennung der Funktion von dem Setzkopf, der zur Anlage ausgeformt ist, dem Stufenbolzen, der zur axialen Kraftübertragung angeregt ist und dem Kupplungsdeckel, ermöglicht einen minimalen Materialeinsatz bei vollständig gewährleisteter Funktion und Kraftübertragung.

Es ist weiterhin vorteilhaft, wenn die Gegenfläche des Abstützelements axial weiter in Richtung einer Druckplatte liegt als die Anlagefläche des Stützfederabschnitts. Somit ist der axiale Versatz des Wirkflächenpaars Anlagefläche und Gegenfläche in Richtung der Druckplatte vorgenommen. Dies zieht den Vorteil der kompakten Bauweise nach sich, da die Druckplatte so ausgestaltet ist, dass sie jenen Raum frei lässt.

Es ist auch vorteilhaft, wenn die Tellerfeder durch das Vorhandensein der Kontaktfläche mittels der Stützfederabschnitte in der Wirkrichtung der Tellerfeder vorgespannt wird. Somit ist es möglich, die Federkennlinie der Tellerfeder in einem solchen Bereich zu beeinflussen, in dem sie das optimale Verhalten aufweist. Weiterhin kann die Tellerfeder durch diese Vorspannung entlastet werden.

Es ist zu beachten, dass das vorgestellte Konzept bei verschiedenen Kupplungstypen angewandt werden kann, vorzüglich bei Hakendesigns.

In anderen Worten kann gesagt werden, dass die erfindungsgemäße Vorrichtung den Nachteil der hohen Kosten für eine zusätzliche Stützfeder ausgleicht und gleichzeitig die logistische Handhabung des zusätzlichen Bauelements der Stützfeder entfällt. Es entfällt somit die Stützfeder als Bauteil, während gleichzeitig die Vorteile des Stützfederkonzepts, nämlich eine kontinuierliche Vorspannung auf die Tellerfeder, weiterhin gewährleistet werden.

So wird die Tellerfeder hinsichtlich ihrer Geometrie optimiert. Die daraus resultierenden Tellerfederzungen sind im Endzustand unter Vorspannung. Weiterhin sind sie über die lose Höhe / die Stützfederabschnittshöhe einstellbar / variierbar. Dies ermöglicht es, gezielt die Vorspannkraft, analog zu der Stützfeder, auszulegen.

Die erfindungsgemäße Konstruktion ist also dadurch gekennzeichnet, dass die Stützfeder als Zusatzbauteil entfällt, dass aus den Tellerfederfenstern Zungen ausgeformt werden, die die Funktion der Stützfeder übernehmen und dass die Vorspannung nun durch die Stützfederabschnittshöhe / die Zungenhöhe realisiert wird.

In der Erfindung wird demzufolge vorgeschlagen, bei einer Haken- oder Bolzenkupplung die Funktion der Stützfeder in die Tellerfeder zu integrieren, wobei die Tellerfeder im Bereich ihrer Tellerfederfenster mehrere S-förmige, in axialer Richtung in Richtung der Anpressplatte ausgestellte Stützfederabschnitte aufweist, die sich mit den deckelseitigen Hakenabschnitten / Abstützelementen oder den Setzköpfen der Bolzen in Anlage befinden.

Die Erfindung wird nachfolgend mittels Figuren näher erläutert.

Es zeigen:
- Fig. 1:: eine perspektivische Ansicht der erfindungsgemäßen Tellerfeder zusammen mit einem Kupplungsdeckel, der integrale Deckelhaken ausbildet;
- Fig. 2:: eine perspektivische Ansicht im Teillängsschnitt von verschiedenen Elementen einer Kupplung;
- Fig. 3:: eine perspektivische Ansicht der erfindungsgemäßen Tellerfeder in Alleinstellung; und
- Fig. 4: eine perspektivische Ansicht der Ausführungsform mit einem Kupplungsdeckel mit einem Bolzen und mit einem Setzkopf.

Die Figuren sind lediglich schematischer Natur und dienen ausschließlich dem Verständnis der Erfindung. Die gleichen Elemente sind mit denselben Bezugszeichen versehen. Die Merkmale der einzelnen Ausführungsbeispiele können untereinander ausgetauscht werden.

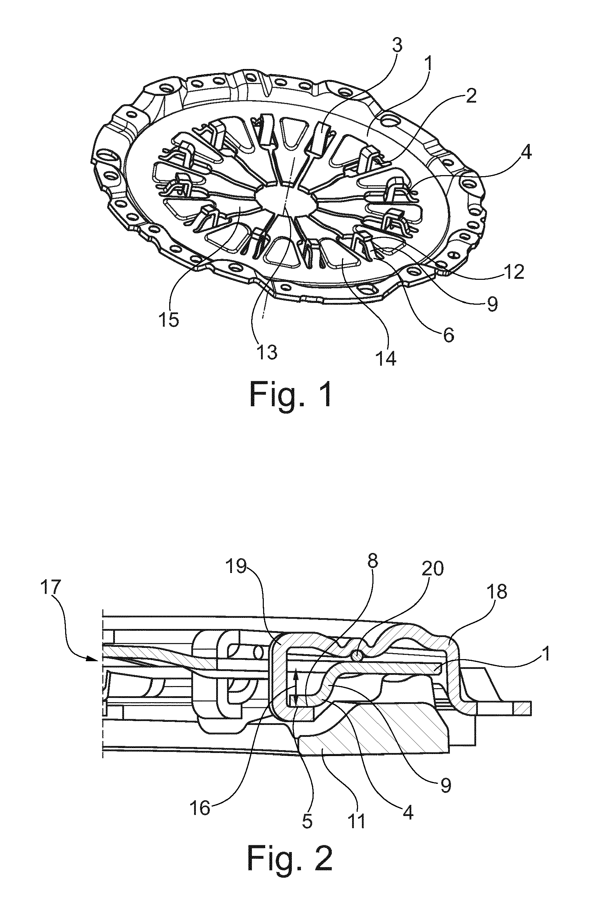

Fig. 1 zeigt eine Tellerfeder 1 für eine Kraftfahrzeugskupplung, wobei die Tellerfeder 1 Tellerfederfenster 2 aufweist. Diese Tellerfederfenster 2 ermöglichen ein Durchragen wenigstens eines Abstützelementes 3. Die Tellerfeder 1 weist wenigstens einen integralen Stützfederabschnitt 4 auf, der als Hebelabschnitt wirkt. Dieser ist zum vorspannenden Anliegen an einer Gegenfläche 5 des Abstützelements 3 vorbereitet.

Die Stützfederabschnitte 4 der Tellerfeder 1 weisen eine Anfangskante 6 sowie eine Endkante 7 auf. Diese verlaufen in Umfangsrichtung. Während die Anfangskante 6 gerade verläuft, kann die Endkante 7 einen abschnittsweise halbkreisartigen Verlauf aufweisen.

Weiterhin weist der Stützfederabschnitt 4 eine Anlagefläche 8 auf, an die die Endkante 7 angrenzt. Die Anlagefläche 8 des Stützfederabschnitts 4 der Tellerfeder 1 ist klein, verglichen mit der gesamten Oberfläche des Stützfederabschnitts 4 der Tellerfeder 1.

Der Stützfederabschnitt 4 weist eine geschwungene Form auf. Diese geschwungene Form kann eine S-Form 9 sein.

Der in Fig. 1 dargestellte Stützfederabschnitt 4 ist als Stützfederzunge 10 ausgestaltet. verläuft in dieser Ausführungsform von einem radial äußeren Punkt der Anfangskante 6 zu einem radial inneren Punkt der Endkante 7, wobei die Stützfederzunge 10 die S-Form 9 aufweist. Diese S-Form 9 führt dazu, dass die Endkante 7 axial weiter in Richtung einer Druckplatte 11 liegt, als die Anfangskante 6.

Die Breite der Tellerfederfenster 2 ist geringer als die der zwischen den Tellerfederfenstern 2 liegenden Abschnitte der Tellerfeder 1. Somit ist der aus den Tellerfederfenstern 2 bestehende Anteil der Tellerfeder 1 in Umfangsrichtung kleiner als der Anteil des durchgehenden Materials.

Die Anzahl der Stützfederzungen 10 ist genau auf die der Abstützelemente 3 abgestimmt. Somit ragen diese optimal durch die Tellerfederfenster 2 hindurch. Dieses Hindurchragen der Abstützelemente 3 durch die Tellerfederfenster 2 ermöglicht eine Kontaktfläche 12, die durch die Berührung der Anlagefläche 8 mit der Gegenfläche 5 entsteht.

Die gesamte Anordnung ist um eine Mittelachse 13 rotationssymmetrisch angeordnet.

Zwischen den Tellerfederfenstern 2 können in Umfangsrichtung Erhöhungen 14 ausgebildet werden. Diese können sowohl aus Bauraumgründen, als auch aus Gründen der Festigkeit der Tellerfeder 1 ausgebildet werden.

Neben den erfindungsgemäßen Stützfederzungen 10 weist die Tellerfeder 1 Federsitze 15 auf, die für den von der Tellerfeder implizierten Reibkraftschluss verantwortlich sind. Die Federsitze 15 sind durch einzelne Spalte voneinander getrennt, wobei die Spalte radial weiter außen in den Tellerfederfenstern 2 münden.

Ein weiteres Charakteristikum der Stützfederzunge 10 ist eine Stützfederabschnittshöhe 16. Diese resultiert aus der S-Form 9 des Stützfederabschnitts 4 der Tellerfeder 1.

Fig. 2 zeigt mehrere Elemente der getriebeseitigen Kupplung 17. Ein Kupplungsdeckel 18 bildet das Abstützelement 3 mit seiner Gegenfläche 5, in diesem Ausführungsbeispiel, integral aus. So ist das Abstützelement 3 als Deckelhaken 19 ausgestaltet. An dem Ende des Deckelhakens 19, das sich axial in Richtung der Druckplatte 11 befindet, ist innenseitig, also in Richtung der Tellerfeder, die Gegenfläche 5 ausgeformt. Diese bildet durch Berührung mit der Anlagefläche 8 die Kontaktfläche 12 aus.

Fig. 2 zeigt auch, dass der Kupplungsdeckel 18 die Tellerfeder 1 umgreift. An der von der Druckplatte 11 abgewandten Seite der Tellerfeder 1 befindet sich zudem ein Drahtring 20.

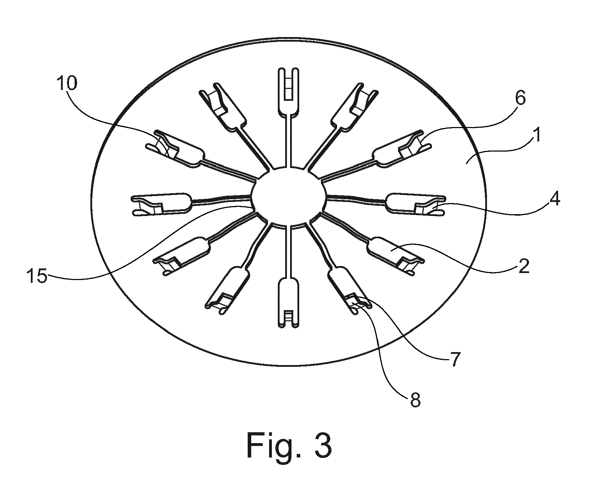

In Bezug auf die sich in Radialrichtung verkleinernden Tellerfederfenster 2 wird auf die Fig. 3 verwiesen.

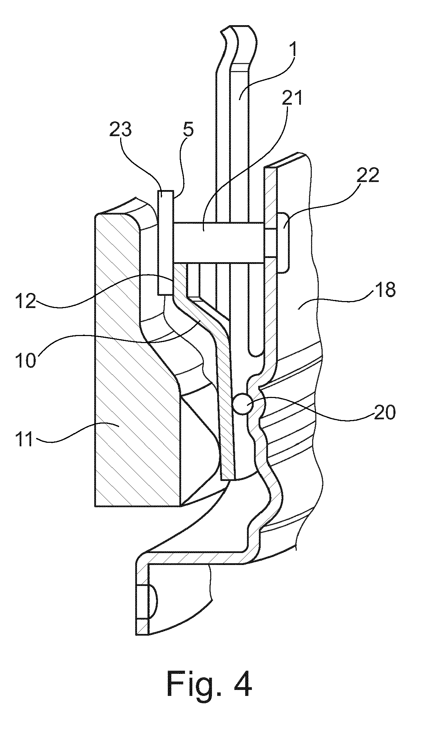

In Fig. 4 ist ein weiteres Ausführungsbeispiel dargestellt. Ein Bolzen 21 übernimmt hierbei die Funktion des Abstützelements 3. Der Bolzen 21 ist als Stufenbolzen ausgeformt und ist starr mit dem Kupplungsdeckel 18 verbunden. Hierfür liegt ein Bolzenteller 22 am Kupplungsdeckel 18 an. Das axial in Richtung der Druckplatte 11 zeigende Ende des Bolzens 21 wird durch einen Setzkopf 23 dargestellt. Dieser Setzkopf 23 stellt die Gegenfläche 5 zur Verfügung, die im Zusammenhang mit der Anlagefläche 8 die für die Vorspannung notwendige Kontaktfläche 12 nach sich zieht.

Der aus der in Fig. 1 dargestellten Ausführungsform bekannte Drahtring 20 ist auch in dem weiteren Ausführungsbeispiel aus Fig. 4 sichtbar. Weiterhin ist hier deutlich erkennbar, dass sich aus dem Tellerfederfenster 2 die Stützfederzunge 10 herausbildet.

### Bezugszeichenliste

- 1: Tellerfeder
- 2: Tellerfederfenster
- 3: Abstützelement
- 4: Stützfederabschnitt
- 5: Gegenfläche
- 6: Anfangskante
- 7: Endkante
- 8: Anlagefläche
- 9: S-Form
- 10: Stützfederzunge
- 11: Druckplatte
- 12: Kontaktfläche
- 13: Mittelachse
- 14: Erhöhung
- 15: Federsitz
- 16: Tellerfederabschnittshöhe
- 17: Kupplung
- 18: Kupplungsdeckel
- 19: Deckelhaken
- 20: Drahtring
- 21: Bolzen
- 22: Bolzenteller
- 23: Setzkopf

## Patentansprüche

1. Tellerfeder (1) für eine Kraftfahrzeugkupplung, mit Tellerfederfenstern (2), um ein Durchragen wenigstens eines Abstützelementes (3) für die Tellerfeder (1) durch die Tellerfeder (1) hindurch zu ermöglichen, **dadurch gekennzeichnet, dass** die Tellerfeder (1) wenigstens einen integralen Stützfederabschnitt (4) aufweist, der zum vorspannenden Anliegen an einer Gegenfläche (5) des Abstützelements (3) vorbereitet ist.

2. Tellerfeder (1) nach Anspruch 1, **dadurch gekennzeichnet, dass** der Stützfederabschnitt (4) eine in Umfangsrichtung verlaufende Anfangskante (6), eine in Umfangsrichtung verlaufende Endkante (7), sowie eine an die Endkante (7) angrenzende Anlagefläche (8) aufweist, wobei die Anfangskante (6) und die Endkante (7) axial zueinander durch Zwischenschaltung eines Hebelabschnitts versetzt sind.

3. Tellerfeder (1) nach Anspruch 2, **dadurch gekennzeichnet, dass** der Hebelabschnitt eine geschwungene Form aufweist.

4. Tellerfeder (1) nach Anspruch 3, **dadurch gekennzeichnet, dass** der Hebelabschnitt eine S-Form (9) aufweist.

5. Tellerfeder (1) nach einem der Ansprüche 1 bis 4, **dadurch gekennzeichnet, dass** der Stützfederabschnitt (4) in Form einer diskreten, federelastisch wirkenden Stützfederzunge (10) ausgestaltet ist.

6. Tellerfeder (1) nach einem der Ansprüche 1 bis 5, **dadurch gekennzeichnet, dass** der Abstand zwischen der Anfangskante (6) und der Endkante (7) der Stützfederzunge (10) größer ist als die Breite der Stützfederzunge (10) in Umfangsrichtung.

7. Tellerfeder (1) nach einem der Ansprüche 1 bis 6, **dadurch gekennzeichnet, dass** mehrere Stützfederzungen (10) in Umfangsrichtung gleichmäßig verteilt aus der Tellerfeder (1) ausgeformt sind.

8. Tellerfeder (1) nach einem der Ansprüche 1 bis 7, **dadurch gekennzeichnet, dass** eine Vorspannung der Tellerfeder (1) über eine Tellerfederabschnittshöhe (16), die den Betrag des axialen Abstandes zwischen der Anfangskante (6) und der Endkante (7) angibt, einstellbar ist.

9. Tellerfeder (1) nach einem der Ansprüche 1 bis 8, **dadurch gekennzeichnet, dass** die Endkante (7) radial innerhalb zur Anfangskante (6) angeordnet ist.

10. Kupplung, umfassend eine Tellerfeder (1) nach einem der Ansprüche 1 bis 9 und einen Kupplungsdeckel (18), der ein integrales Abstützelement (3) mit einer Gegenfläche (5) oder ein vom Kupplungsdeckel separates Abstützelement (3) mit einer Gegenfläche (5) aufweist, wobei an der Gegenfläche (5) der Stützfederabschnitt (4) anliegt.
